(19) Europäisches Patentamt
European Patent Office
Office européen des brevets

(11) Numéro de publication: **0 391 774 A2**

(12) **DEMANDE DE BREVET EUROPEEN**

(21) Numéro de dépôt: **90400865.3**

(51) Int. Cl.5: **C01B 33/34**

(22) Date de dépôt: **30.03.90**

(30) Priorité: **31.03.89 FR 8904233**

(43) Date de publication de la demande:
**10.10.90 Bulletin 90/41**

(84) Etats contractants désignés:
**BE DE GB IT NL**

(71) Demandeur: **ELF FRANCE**
**Tour Elf 2, Place de la Coupole**
**LA DEFENSE 6 - 92400 Courbevoie(FR)**

(72) Inventeur: **Guth, François**
**59, rue Bellevue, Brunstatt**
**F-68200 Mulhouse(FR)**
Inventeur: **Kessler, Henri**
**17, rue de la Forêt**
**F-68270 Weittenheim(FR)**
Inventeur: **des Courières, Thierry**
**152, boulevard Yves Farge**
**F-69007 Lyon(FR)**

(74) Mandataire: **Boillot, Marc**
**SOCIETE NATIONALE ELF AQUITAINE**
**Division Propriété Industrielle Tour Elf**
**F-92078 Paris la Défense Cédex 45(FR)**

(54) **Procédé de synthèse de précurseurs de tamis moléculaires du type silicoaluminophosphate, précurseurs obtenus et leur application à l'obtention desdits tamis moléculaires.**

(57) Procédé de synthèse de précurseurs de tamis moléculaires du type silicoaluminophosphate par chauffage à ≧ 100 °C sous pression autogène d'un mélange réactionnel renfermant des sources de silicium, d'aluminium et de phosphore en présence d'un agent structurant organique et de l'acide fluorhydrique. Le précurseur obtenu peut être transformé en tamis moléculaire par calcination. Les tamis moléculaires du type silicoaluminophosphate sont utiles comme adsorbants et catalyseurs de transformation d'hydrocarbures.

EP 0 391 774 A2

# PROCEDE DE SYNTHESE DE PRECURSEURS DE TAMIS MOLECULAIRES DU TYPE SILICOALUMINOPHOSPHATE, PRECURSEURS OBTENUS ET LEUR APPLICATION A L'OBTENTION DESDITS TAMIS MOLECULAIRES

La présente invention concerne un nouveau procédé de synthèse de précurseurs de tamis moléculaires du type silicoaluminophosphate, les précurseurs obtenus par ce procédé ainsi que leur application à l'obtention desdits tamis moléculaires.

Plusieurs phosphates d'aluminium microporeux cristallisés présentant des propriétés de tamis moléculaires ont été décrits dans le brevet européen 43562. Ces produits correspondent à la formule générale : m R : $Al_2O_3$ : (1 ± 0,2)$P_2O_5$ : n $H_2O$ où R représente un agent structurant organique, amine ou sel d'ammonium quaternaire, occlus dans les canaux de la structure, m et n représentent le nombre de moles de R et de $H_2O$ respectivement par mole de $Al_2O_3$. Le rapport molaire Al/P de ces matériaux est pratiquement égal à 1. La charge positive $PO_2^+$ associée au phosphore des tétraèdres est équilibrée par $AlO_2^-$ associé à la présence de l'aluminium dans les tétraèdres. Il en résulte que ces produits ne présentent pas de propriétés d'échange d'ions.

Une fois calcinés pour éliminer l'espèce organique, ces matériaux présentent par contre un caractère hydrophyle relativement marqué et adsorbent diverses autres molécules. Les propriétés catalytiques par contre restent très limitées, en tout cas en ce qui concerne la catalyse acido-basique.

L'incorporation de silicium dans ces phosphates d'aluminium microporeux est décrite dans les brevets EP-B-103117, EP-A-146384 à 146389, EP-A-147991, EP-A-154122, EP-A-185525 et GB-B-2155916.

Les silicoaluminophosphates ainsi obtenus sont des tamis moléculaires et possèdent des propriétés d'échange d'ions. Il peuvent être convertis, en général par simple calcination, en solides présentant des propriétés catalytiques.

La synthèse des silicoaluminophosphates s'effectue par voie hydrothermale, par chauffage à 100 - 200°C pendant 5 heures à 20 jours, éventuellement sous agitation, d'un mélange réactionnel comportant un agent structurant organique R et des sources d'aluminium, de silicium et de phosphore. Le pH initial du milieu est de 3 - 8, le pH final est de 8 - 10. Le solide obtenu correspond à la formule :

$R_{m'} : Si_x Al_y P_z O_2 : n' H_2O$

où R est l'agent structurant organique, m′ correspond au nombre de moles de structurant et n au nombre de moles d'eau par mole de $Si_x Al_y P_z O_2$, x, y et z correspondent aux fractions molaires de silicium, d'aluminium et de phosphore.

La valeur maximale de m′ dépend de la nature de R, plus précisement de sa dimension et de sa charge ainsi que du volume des pores du solide microporeux. La valeur de m′ est en général comprise entre 0 et 0,3, n′ varie entre 0 et 0,3.

Les fractions molaires x, y et z sont telles que x + y + z = 1. La valeur de x se situe en général entre > 0 et 0,3, y entre 0,2 et 0,6 et z entre 0,2 et 0,6.

Des cations de compensation, en général des cations alcalins ou alcalinoterreux peuvent être présents dans la structure. Ces cations proviennent du milieu de synthèse ou d'un échange d'ions après calcination. Ils participent avec les cations organiques $R^+$ ou avec les protons à la compensation de la charge négative de la charpente résultant de l'incorporation du silicium dans les tétraèdres.

Les silicoaluminophosphates obtenus par ce procédé présentent des défauts de cristallisation qui sont parfois à l'origine de leur manque de stabilité thermique.

Nous avons trouvé maintenant, un procédé de synthèse qui permet d'améliorer la cristallinité et la pureté des silicoaluminophosphates, ce qui améliore notablement la stabilité thermique des produits obtenus.

En même temps ce procédé diminue les durées de cristallisation, ce qui est une source d'économie.

Le nouveau procédé de synthèse de précurseurs de tamis moléculaires du type silicoaluminophosphate consiste à réaliser un mélange réactionnel renfermant de l'eau, une source d'aluminium, une source de silicium, une source de phosphore, un agent structurant organique et éventuellement une source de cations de compensation et des composés acides ou basiques permettant d'amener le pH du milieu à la valeur désirée, en général entre 5 et 9, chauffer ce mélange à une température ≧ à 100°C sous pression autogène pendant une durée suffisante pour effectuer la cristallisation, puis séparer le solide cristallisé, et se caractérise en ce que le mélange réactionnel renferme l'acide fluorhydrique comme source d'anions fluorure.

La composition molaire rapportée à $Al_2O_3$ du mélange réactionnel est la suivante (R correspond à l'agent structurant):

r R : s $SiO_2$ : $Al_2O_3$ : p $P_2O_5$ : f F : h $H_2O$

La valeur de r varie en général entre 0,01 et 3, de préférence entre 1 et 2, s varie entre 0,01 et 3, de préférence entre 0,5 et 1, p varie entre 0,01 et 1, de préférence entre 0,5 et 1, f varie entre 0,01 et 2, de préférence 0,5 et 1 et h varie entre 0 et 500, de préférence 50 et 100.

L'agent structurant organique comporte en général un élément du groupe 5a du tableau périodique, comme l'azote ou le phosphore. Il s'agit de préférence de dérivés de l'azote et plus particulièrement d'amines ou de sels d'ammonium quaternaire. Nous pouvons mentionner la diéthylamine, la triéthylamine, la dipropylamine, la tripropylamine, la dibutylamine, la tributylamine, l'hydroxyde de tétraéthylammonium, l'hydroxyde de tétrapropylammonium et l'hydroxyde de tétrabutylammonium. Il est également possible d'utiliser les aminoalcools ou aminoéthers, comme le diéthylaminoéthanol ou la morpholine.

Parmi les sources d'aluminium on peut citer les oxydes et hydroxydes d'aluminium, comme l'hydroxyde d'aluminium $Al(OH)_3$, la boehmite AlO (OH) ou la pseudoboehmite, une alumine, de préférence une alumine réactive comme l'alumine gamma, les sels d'aluminium comme le fluorure d'aluminium, le sulfate d'aluminium, le phosphate d'aluminium ou l'aluminate de sodium ainsi que les alkoxydes d'aluminium de formule $Al\ (OR_1)_3$ dans laquelle $R_1$ est un radical alcoyle en $C_1$ à $C_4$.

On utilise de préférence la pseudoboehmite ou l'isopropoxyde d'aluminium.

De nombreuses sources de silicium peuvent être utilisées, on peut citer les silices sous forme d'hydrogel, d'aérogel ou de suspension colloïdale, les silices provenant de la précipitation de silicates solubles ou de l'hydrolyse d'esters siliciques, comme l'ester tétraéthylique de l'acide monoorthosilicique, $Si(OEt)_4$) ou de l'hydrolyse de complexes comme le fluorosilicate de sodium $Na_2\ Si\ F_6$ ou d'ammonium $(NH_4)_2\ Si\ F_6$.

La source préférée de silicium est la suspension colloïdale ou l'aérogel.

Au lieu de partir de sources séparées d'aluminium et de silicium, on peut aussi utiliser des sources où ils sont combinés, comme les aluminosilicates cristallins ou de préférence les gels de silice-alumine amorphes.

La source de phosphore préférée est l'acide phosphorique, mais ses sels et esters comme les phosphates alcalins, les phosphates d'aluminium réactifs ou les phosphates d'alkyle conviennent également.

Les acides ou sels d'acides, les bases ou sels basiques ajoutés éventuellement pour ajuster le pH du milieu à la valeur désirée peuvent être choisis parmi les acides courants, comme par exemple, l'acide chlorhydrique, l'acide citrique, l'acide sulfurique, l'acide acétique, les sels acides, comme le fluorure acide d'ammonium, le fluorure acide de potassium, le sulfate acide de sodium et les bases courantes, comme l'ammoniaque, la soude, les carbonates acides ou neutres de sodium et les bases azotées comme la méthylamine. Des mélanges tampon, formés par exemple d'acide acétique et d'acétate de sodium ou d'ammoniaque et de chlorure d'ammonium conviennent également.

Des cations minéraux, de préférence alcalins, compensant la charge négative de la charpente ne sont généralement pas fournis sous forme de composés ajoutés séparément. Ils proviennent fréquemment de composés additionnés au mélange réactionnel, tels que les sources de Si, Al et/ou P, ou l'agent structurant ou un agent d'ajustement du pH.

Toutefois il est possible d'ajouter des cations alcalins ou alcalinoterreux, de préférence des cations alcalins sous forme de chlorures, sulfates, carbonates ou acétates.

La première étape du procédé consiste à réaliser le mélange réactionnel renfermant l'eau et les sources d'aluminium, de phosphore, de silicium, d'anions fluorure, de structurant organique, éventuellement la source de cations de compensation et le(s) composé(s) à effet acide ou basique. Ce mélange peut être réalisé dans un ordre quelconque.

Le mode opératoire préféré consiste à former un gel aluminophosphate et à y ajouter la source de silice. Après homogénéisation de l'ensemble par agitation, on additionne la source d'anions fluorure, l'agent structurant organique et éventuellement la source de cations de compensation et des composés acides ou basiques. L'ensemble est à nouveau soigneusement homogénéisé. On obtient un gel.

La deuxième étape consiste en la cristallisation du gel formé. La cristallisation s'effectue en chauffant ce gel à une température au-dessus de 100 °C et de préférence comprise entre 100° et 200 °C sous pression autogène. On utilise de préférence un autoclave revêtu d'un matériau polymère, en général du polytétrafluoroéthylène. Il est avantageux d'agiter le gel en permanence pendant la cristallisation.

La durée du chauffage nécessaire à la cristallisation dépend de la composition du gel et de la température de cristallisation. Elle se situe en général entre 5 heures et 15 jours.

La morphologie, la taille et la cinétique de formation des cristaux peuvent être modifiées par introduction dans le milieu réactionnel de germes constitués par des cristaux, éventuellement broyés, du tamis moléculaire recherché. Ces caractéristiques peuvent également être modifiées en changeant la vitesse d'agitation de la masse réactionnelle.

Après cristallisation, on récupère par filtration ou centrifugation le silicoaluminophosphate brut de synthèse qu'on sèche à l'air vers 60 °C. Ce solide contient occlus dans ses pores et cavités l'agent structurant organique. Ce dernier est associé d'une part au fluorure et d'autre part joue le rôle de cation de compensation. A côté de l'agent structurant, il peut également occlure de l'eau d'hydratation et des cations de compensation minéraux. La déshydratation par chauffage à environ 150 °C ne provoque pas en général le départ de l'agent structurant.

Les précurseurs de silicoaluminophosphates dans leur forme anhydre correspondent à la formule générale:

$R_{r'}\ Si_x\ Al_y\ P_z\ O_2\ F_{f'}$

où x, y et z représentent les fractions molaires de silicium, d'aluminium et de phosphore présents sous forme d'oxydes. La somme de x, y et z est égale à 1 et la valeur de x se situe en général entre 0,01 et 0,3, y entre 0,35 et 0,50 et z entre 0,2 et 0,49.

La valeur de r′ est comprise entre 0,01 et 0,2. La valeur de f′ est comprise entre 0,01 et 0,2, ce qui correspond à une teneur pondérale en fluor du précurseur comprise entre 0,3 et 8 %.

Les silicoaluminophosphates sont obtenus à partir de ces précurseurs par élimination de l'agent structurant. L'élimination a lieu par calcination à une température supérieure à 200 °C et de préférence comprise entre 400 et 700 °C.

Après calcination sous air sec, la teneur en fluor baisse, mais reste en général entre 0,01 et 0,1 % en masse.

La stabilité thermique et hydrothermique des silicoaluminophosphates obtenus en présence d'anions fluorure issu d'acide fluorhydrique est en général supérieure à celle des silicoaluminophosphates ayant la même structure cristalline, préparés en absence d'ions fluorure ou en présence d'ions fluorures issus de sels de l'acide fluorhydrique.

La stabilité thermique et hydrothermique des silicoaluminophosphates selon l'invention facilite leur emploi comme adsorbants et catalyseurs de transformation d'hydrocarbures.

L'identification des silicoaluminophosphates obtenus selon l'invention se fait de manière commode à partir de leur diagramme de diffraction des rayons X. Ce diagramme de diffraction est obtenu à l'aide d'un diffractomètre en utilisant la méthode classique des poudres avec le rayonnement K du cuivre. A partir de la position des pics de diffraction représentée par l'angle 20, on calcule, par la relation de Bragg, les équidistances réticulaires dhkl caractéristiques de l'échantillon. L'estimation de l'erreur de mesure Δ(dhkl) sur dhkl se calcule, en fonction de l'erreur absolue $\Delta\ (2\theta)$ affectée à la mesure de $2\theta$, par la relation de Bragg. Une erreur absolue $\Delta(2\theta)$ égale à $\pm 0{,}2^\circ$ est couramment admise. L'intensité relative I/Io affectée à chaque valeur de dhkl est mesurée d'après la hauteur du pic de diffraction correspondant. Les diagrammes de diffraction présentés dans les tableaux I, II, III, IV et V sont représentatifs des différents types structuraux synthétisés. Les valeurs dhkl et les intensités relatives sont caractéristiques d'un exemple de précurseur brut de synthèse pour chaque type structural. Elles ne limitent pas les variations observées, essentiellement liées à la fraction molaire de silicium et à la nature des molécules présentes dans le solide brut de synthèse.

La nomenclature utilisée dans la partie expérimentale pour désigner la structure cristalline des différents silicoaluminophosphates synthétisés est celle du brevet européen EP - 103 117.

Les exemples suivants sont donnés à titre non limitatif pour illustrer l'invention.

<u>EXEMPLE 1 : Préparation de SAPO-5</u>

On prépare un mélange réactionnel formé par 60g d'eau et 11,6g d'acide orthophosphorique à 85 % (Prolabo), auxquels on joint 20,4g d'isopropoxyde d'aluminium (Merck). Le mélange est agité jusqu'à homogénéisation. On ajoute à ce mélange, sous agitation, 4,5g de silice colloïdale à 40 % (Ludox AS 40), puis 2g d'acide fluorhydrique à 48 % (Prolabo) et 7,3g de tripropylamine (Fluka). Le mélange réactionnel résultant est agité pendant quelques heures. La composition molaire du mélange final est la suivante:

$1Pr_3N : 0{,}6\ SiO_2 : 1Al_2O_3 : 1P_2O_5 : 76\ H_2O : 1\ HF$

(Les quantités engagées pour chaque constituant ont été calculées pour 1/20 de mole de $Al_2O_3$).

Le mélange (pH = 7,5) est chauffé pendant 20 heures à 170 °C dans un autoclave agité, chemisé de polytétrafluoroéthylène, de volume 120 $cm^3$. Le solide est obtenu de manière générale après filtration et lavage à l'eau bidistillée, puis séchage à l'air à 60 °C.

L'observation, au microscope optique et au MEB (Microscope Electronique à Balayage), du solide obtenu, montre des cristaux sous forme de prismes hexagonaux isolés ou parfois associés, de taille 30 x 5 μm. Aucune impureté n'est détectée.

L'analyse par diffraction des rayons X du précurseur brut de synthèse montre qu'il s'agit d'une phase SAPO-5 caractérisée par le diagramme de diffraction du tableau I.

TABLEAU I

| Diagramme de diffraction des rayons X de l'échantillon de phase SAPO-5 brut de synthèse préparé selon l'exemple 1. | |
|---|---|
| d hkl $10^{-10}$m | I/Io |
| 12,1 | 100 |
| 6,88 | 8 |
| 5,94 | 20 |
| 4,50 | 33 |
| 4,24 | 18 |
| 3,98 | 38 |
| 3,61 | 2 |
| 3,437 | 24 |
| 3,076 | 7 |
| 2,976 | 16 |
| 2,672 | 2 |
| 2,597 | 13 |
| 2,434 | 2 |
| 2,393 | 5 |
| 2,174 | 2 |
| 2,139 | 3 |
| 2,116 | 2 |
| 2,074 | 1 |
| 2,025 | 1 |
| 2,015 | 1 |
| 1,905 | 3 |

L'analyse de Si, Al et P dans les cristaux par microsonde électronique donne la composition suivante : (moyenne sur plusieurs points de dosage)
$(Si_{0,017}\ Al_{0,529}\ P_{0,453})\ O_2$
La teneur en fluor mesurée par activation neutronique est de 0,7 % en masse.
Les pertes de masses mesurées par TG (analyse thermogravimétrique) sous air sont les suivantes :

| $H_2O$ | $Pr_3$ N + F |
|---|---|
| 2,7 % | 9,9 % |

Après calcination à 550° C sous air, pendant 8 heures, et réhydratation dans un humidificateur à la température ambiante à 80 % d'humidité relative, le solide reprend 23 % en masse d'eau. La teneur en fluor après calcination sous air sec déterminée par RMN de $19_F$ sur solide est d'environ 0,01 à 0,1 % en masse.

Les capacités d'adsorption de n-hexane et benzène suivantes ont été mesurées à l'aide d'une électro

balance sur l'échantillon calciné à 550 °C.

| | diamètre cinétique $10^{-10}$m | T (°C) | P/Po | Quantité adsorbée (% masse) |
|---|---|---|---|---|
| n-hexane | 4,3 | 20 | 0,9 | 6,1 |
| benzène | 5,85 | 20 | 0,9 | 8,1 |

Après calcination à 880 °C sous air pendant 8 heures du produit brut, le diagramme de diffraction des rayons X est semblable à celui du Tableau I et ne montre pas de variation de cristallinité.

Après traitement à la vapeur d'eau pure à 750 °C pendant 17 heures, la cristallinité est toujours de 100 % par rapport au produit calciné.

EXEMPLE 2 : Préparation de SAPO -5

On répète l'exemple 1 en variant les conditions opératoires.
Le mélange réactionnel identique à celui de l'exemple 1 est chauffé pendant 88 heures à 150 °C dans un autoclave statique. La fraction engagée correspond à 1/40 de mole de $Al_2O_3$.
L'observation au microscope optique du solide obtenu montre des cristaux sous forme de prismes hexagonaux de diverses tailles (15 x 50 µm à 5x5 µm).
Le diagramme de diffraction des rayons X du produit brut est similaire a celui du tableau I.
L'analyse de Si, Al et P, dans les cristaux, par microsonde électronique, donne la composition suivante:
$(Si_{0,015}\ Al_{0,527}\ P_{0,458})\ O_2$
La cartographie X du silicium, sur ces cristaux met en évidence pour certains un enrichissement en silicium à la périphérie.
Après calcination à 880 °C sous air pendant 8 heures le solide montre une très bonne stabilité thermique.

EXEMPLE 3 : Préparation de SAPO-5

On répète l'exemple 1 en changeant la source d'aluminium.
Dans cette préparation on utilise comme source d'aluminium un oxyde d'aluminium hydraté synthétisé au laboratoire (Al OOH = $Al_2O_3$ 62,8 % $H_2O$ 37,2 %) au lieu de l'isopropoxyde d'aluminium, les sources de silicium et de phosphore étant par ailleurs toujours les mêmes.
La composition molaire du mélange réactionnel est:
2 $Pr_3$ N : 0,6 $SiO_2$ : 1 $Al_2O_3$ : 1 $P_2O_5$ : 76 $H_2O$ : 1 HF La fraction engagée correspond à 1/40 mole de $Al_2O_3$, les conditions de chauffage et de pH étant égales à celles de l'exemple 1.
Le diagramme de diffraction des rayons X du solide obtenu est semblable à celui du tableau I.

L'analyse de Si, Al et P dans les cristaux, donne la composition suivante :
$(Si_{0,011}\ Al_{0,506}\ P_{0,483})O_2$

Les pertes de masse mesurées par TG sont les suivantes :

| $H_2O$ | $P_{r3}$ N + F |
|---|---|
| 3 % | 10,4 % |

Après calcination à 550 °C et réhydratation le solide reprend 23 % en masse d'eau. L'analyse par diffraction des rayons X montre un diagramme semblable à celui du produit brut de synthèse.

EXEMPLE 4 : Préparation de SAPO-5

On répète l'exemple 1 en changeant la nature de l'agent structurant organique.

Dans cette préparation on utilise comme structurant la diéthyléthanolamine (FLUKA) au lieu de la tripropylamine, la composition molaire et les conditions de chauffage du mélange réactionnel étant égales par ailleurs, à celles de l'exemple 1. La fraction engagée correspond à 1/40 mole de $Al_2O_3$ et le pH = 6.

L'observation au microscope optique du solide obtenu montre des cristaux sous forme de prismes hexagonaux de taille moyenne 4 X 15 µm.

Le diagramme de diffraction des rayons X est semblable à celui du tableau I.

L'analyse de Si, Al et P dans les cristaux donne la composition suivante :

$(Si_{0,013}\ Al_{0,479}\ P_{0,508})O_2$

Après calcination à 550 °C et réhydratation, le solide reprend 24 % en masse d'eau; le diagramme de diffraction des rayons X est semblable à celui du produit brut de synthèse.

EXEMPLE 5 : (Comparatif) Préparation de SAPO-5

Cet exemple illustre l'importance de la présence d'ions fluorure dans le milieu de synthèse sur la cristallinité et la stabilité thermique du SAPO-5.

Un essai a été réalisé en absence d'ions fluorure dans les conditions de l'exemple 1.

L'analyse par diffraction des rayons X du solide obtenu, montre la présence de plus de 50 % d'amorphes.

Dans un deuxième essai la durée de la réaction a été multipliée par trois. Le diagramme de diffraction obtenu est alors semblable à celui du tableau I.

L'observation au microscope optique et au MEB de ce deuxième échantillon montre des cristaux prismatiques hexagonaux de taille 1 - 5 µm x 10 - 15 µm, dont les faces sont couvertes d'impuretés, ainsi que des particules et des agrégats plus ou moins feuilletés non identifiés.

L'analyse de Si, Al et P dans les cristaux, donne la composition suivante :

$(Si_{0,013}\ Al_{0,501}\ P_{0,486})O_2$

Après calcination à 550 °C, la reprise en eau du solide est de 23 % en masse.

Les diagrammes de diffraction des rayons X obtenus sur le solide calciné à 550 °C et à 880 °C dans les conditions mentionnées dans l'exemple 1, montrent une légère baisse de cristallinité comparativement aux produits obtenus suivant l'invention.

Après traitement à la vapeur d'eau pure à 750 °C pendant 17 heures, la fraction cristalline est identique à celle du produit calciné.

EXEMPLE 6 : Préparation de SAPO-11

On prépare un mélange réactionnel formé par 30g d'eau et 5,8g d'acide orthophosphorique (Prolabo), auxquels on joint 10,2g d'isopropoxyde d'aluminium (Merck). Le mélange est agité jusqu'à homogénéisation. On ajoute à ce mélange, sous agitation, 2,3g de silice colloïdale à 40 % (Ludox AS 40), puis 1g d'acide fluorhydrique à 48 % (Prolabo) et 2,5g de di-n-propylamine (Fluka). Le mélange est agité quelques heures.

La composition molaire du mélange final est la suivante:

$1\ Pr_2\ NH : 0,6\ SiO_2 : 1\ Al_2O_3 : 1\ P_2O_5 : 73\ H_2O : 1\ HF$

(La fraction engagée correspond à 1/40 mole de $Al_2O_3$). Le mélange réactionnel (pH = 6,5) est chauffé à 170 °C pendant 20 heures sous agitation.

L'observation au microscope optique du solide obtenu montre des cristaux sous forme de parallélépipède de 4 x 6 µm environ.

L'analyse par diffraction des rayons X du produit brut indique qu'il s'agit d'une phase SAPO-11 pure caractérisée par le diagramme de diffraction du tableau II.

TABLEAU II

| Diagramme de diffraction des rayons X de l'échantillon de phase SAPO-11 brut de synthèse préparé selon l'exemple 6. | |
|---|---|
| d hkl $10^{-10}$m | I/Io |
| 10,9 | 32 |
| 9,3 | 60 |
| 6,67 | 19 |
| 5,64 | 40 |
| 5,43 | 6 |
| 4,667 | 9 |
| 4,329 | 44 |
| 4,217 | 100 |
| 4,010 | 51 |
| 3,931 | 61 |
| 3,905 | 72 |
| 3,822 | 81 |
| 3,630 | 8 |
| 3,601 | 11 |
| 3,566 | 6 |
| 3,379 | 14 |
| 3,336 | 17 |
| 3,140 | 6 |
| 3,118 | 15 |
| 3,066 | 5 |
| 3,025 | 6 |
| 2,859 | 3 |
| 2,838 | 10 |
| 2,720 | 16 |
| 2,619 | 11 |
| 2,506 | 4 |
| 2,459 | 6 |
| 2,396 | 9 |
| 2,378 | 10 |
| 2,279 | 3 |

TABLEAU III :

| Diagramme de diffraction des rayons X de l'échantillon de phase SAPO-11, calciné à 550 °C sous air, réhydraté à 80 % HR, préparé selon l'exemple 6 | | | |
|---|---|---|---|
| d hkl $10^{-10}$m | I/Io | d hkl $10^{-10}$m | I/Io |
| 11,04 | 21 | 3,463 | 19 |
| 9,11 | 56 | 3,424 | 12 |
| 7,62 | 5 | 3,336 | 12 |
| 6,96 | 27 | 3,276 | 13 |
| 6,50 | 5 | 3,229 | 17 |
| 6,10 | 5 | 3,206 | 13 |
| 5,53 | 72 | 3,140 | 7 |
| 5,06 | 2 | 3,010 | 29 |
| 4,57 | 13 | 2,938 | 15 |
| 4,48 | 30 | 2,820 | 8 |
| 4,29 | 6 | 2,748 | 23 |
| 4,073 | 100 | 2,638 | 8 |
| 4,019 | 55 | 2,597 | 4 |
| 3,965 | 48 | 2,519 | 11 |
| 3,814 | 34 | 2,415 | 8 |
| 3,798 | 57 | 2,360 | 4 |
| 3,720 | 18 | 2,319 | 13 |
| 3,674 | 16 | 2,199 | 8 |
| 3,517 | 6 | | |

La cartographie X du silicium sur les cristaux montre un hétérogénéité intracristalline; l'analyse de Si, Al, P dans les cristaux donne les compositions suivantes :
bordure des cristaux $(Si_{0,024}\ Al_{0,506}\ P_{0,470})O_2$
coeur des cristaux $(Si_{0,10}\ Al_{0,466}\ P_{0,434})O_2$

La teneur en fluor, mesurée par activation neutronique dans le solide brut, est de 1,3 % en masse.

Les pertes de masse mesurées par TG sont les suivantes :

| $H_2O$ | $Pr_2$ NH + F |
|---|---|
| 2,2 % | 10,5 % |

Après calcination à 550 °C et réhydratation le solide reprend 14 % en masse d'eau. Une transition de phase induite par l'hydratation est observée. Le diagramme de diffraction du solide calciné hydraté est présenté dans le Tableau III et montre une très bonne cristallinité.

La teneur en fluor après calcination sous air sec est de 0,01 à 0,1 % en masse.

Après calcination à 900 °C à l'air pendant 6 heures et réhydratation, le produit présente un diagramme de diffraction des rayons X, identique à celui du tableau III et montre donc une très bonne stabilité thermique.

EXEMPLE 7: Préparation de SAPO-11

Cet exemple illustre la possibilité de travailler en présence de germes permettant de réduire l'hétérogénité de la répartition du silicium observée dans l'exemple 6 Une préparation identique à celle de l'exemple

6 est réalisée, avec l'adjonction de germes ( 0,1 % en masse) constitués par des cristaux de l'échantillon de la phase SAPO-11 de l'exemple 6, finement broyés. La fraction engagée correspond à de 1/20 mole de $Al_2O_3$, les conditions de chauffage et de pH étant par ailleurs identiques à celles de l'exemple 6.

L'observation au microscope optique et au MEB du solide obtenu montre des monocristaux de forme parallélépipèdique de 3 x 5 µm et des intercroissances de taille 8µm.

L'analyse par diffraction des rayons X du produit brut donne un diagramme de diffraction semblable à celui du tableau II.

La cartographie X du silicium sur les cristaux montre une hétérogénéité, inter- et intracristalline, qui est cependant plus faiblement marquée que dans l'exemple 6. L'analyse de Si, Al et P dans les cristaux donne les compositions suivantes :

bordure des intercroissances ($Si_{0,027}$ $Al_{0,508}$ $P_{0,465}$ $O_2$ ou monocristaux

coeur des intercroissance ($Si_{0,046}$ $Al_{0,496}$ $P_{0,458}$ $O_2$

La teneur en fluor mesurée par activation neutronique dans un solide brut est de 1,2 % en masse.

Les pertes de masse mesurées par TG sont les suivantes :

| $H_2O$ | $Pr_2$ NH + F |
|---|---|
| 1,5 % | 9,9 % |

Après calcination à 550 °C et réhydratation, la transition de phase induite par l'hydratation, caractéristique de la phase SAPO-11, est observée. Le diagramme de diffraction des rayons X est identique à celui du tableau III.

Les capacités d'adsorption de n-hexane et de benzène sont les suivantes :

| | diamètre cinétique $10^{-10}$m | T (°C) | P/Po | Quantité adsorbée (% en masse) |
|---|---|---|---|---|
| n-hexane | 4,3 | 20 | 0,9 | 5,9 |
| benzène | 5,85 | 20 | 0,9 | 6,8 |

Après traitement à la vapeur d'eau pure à 750 °C pendant 17 heures, la fraction cristalline est de 100 % par rapport à celle du produit calciné hydraté.

EXEMPLE 8 : Préparation de SAPO-11

Cet exemple illustre la possibilité d'utiliser comme source de silicium une silice de combustion (Aerosil de Degussa) à la place d'une silice colloïdale, permettant une répartition homogène du silicium dans les cristaux. Une préparation identique à celle de l'exemple 6 est réalisée avec la silice de combustion, et chauffée dans les mêmes conditions. La fraction engagée correspond à 1/40 mole de $Al_2O_3$ et le pH est de 6,5.

L'analyse par diffraction des rayons X du solide obtenu donne un diagramme de diffraction similaire à celui du tableau II.

L'analyse de Si, Al et P dans les cristaux, montre les deux populations de cristaux, de taille et de composition légèrement différentes, suivantes :

cristaux 2 x 15 µm ($Si_{0,04}$ $Al_{0,47}$ $P_{0,49}$)$O_2$

(minoritaires)

cristaux 5 x 10 µm à 25 x 45µm ($Si_{0,019}$ $Al_{0,507}$ $P_{0,474}$)$O_2$

(majoritaires)

La cartographie X du silicium montre une répartition très homogène du silicium dans les cristaux.

Après calcination à 550 °C et réhydratation le solide reprend 16 % d'eau en masse. La transition de phase induite par l'hydratation, caractéristique de la phase SAPO-11, est observée et le diagramme de diffraction des rayons X est semblable à celui du tableau III.

Après calcination à 880° C et réhydratation le même diagramme de diffraction des rayons X est obtenu et montre donc une très bonne stabilité thermique.

EXEMPLE 9 : (Comparatif) Préparation de SAPO-11

Cet exemple illustre l'importance de la présence d'ions fluorure dans le milieu de synthèse pour la stabilité thermique des cristaux 'de SAPO-11.
Une préparation identique à celle de l'exemple 6 mais en absence d'acide fluorhydrique est réalisée. La fraction engagée correspond à 1/40 mole de $Al_2O_3$. Le mélange réactionnel (pH = 7,5) est chauffé dans les mêmes conditions que dans l'exemple 6, mis à part la durée qui est multipliée par 3 (65 heures).
L'observation au microscope optique et au MEB du solide obtenu montre des amas polycristallins de taille <3-4μm.
Le diagramme de diffraction des rayons X du produit brut est semblable à celui du tableau II.
L'analyse de Si,Al et P dans les cristaux donne les compositions suivantes :
$(Si_{0,059}\ Al_{0,488}\ P_{0,453}\ O_2$
Après calcination à 550° C et réhydratation la reprise en eau est de 16 % en masse. La transition de phase induite par l'hydratation, caractéristique de la phase SAPO-11, est observée. Le spectre de diffraction des rayons X montre cependant une baisse importante de cristallinité contrairement aux phases SAPO-11 synthétisées en présence d'ions fluorure.
Après calcination à 900° C et réhydratation le même spectre de diffraction des rayons X est observé.

EXEMPLE 10 : Préparation de SAPO-34

On prépare un mélange réactionnel formé par 37g d'eau et 4g d'acide orthophosphorique à 85 % (Prolabo), auxquels on joint 15,3g d'isopropoxyde d'aluminium (Merck). Le mélange est agité jusqu'à homogénéisation, on ajoute à ce mélange, sous agitation, 2,25g de silice colloïdale à 40 % (Ludox AS 40) puis 1g d'acide fluorhydrique à 48 % (Prolabo) et 9,2 g d'hydroxyde de tétraéthylammonium à 40 % (Fluka). Le mélange réactionnel résultant est agité pendant quelques heures.

La composition molaire du mélange final est la suivante :
1 TEAOH: 0,6 $SiO_2$ : 1,5 $Al_2O_3$ : 0,7 $P_2O_5$ : 100 $H_2O$:1HF

(La fraction engagée correspond à 1/40 mole de $Al_2O_3$).

Le mélange (pH 8,5) est chauffé pendant 149 heures à 200° C sous agitation.

L'observation au microscope optique et au MEB du solide obtenu montre des cristaux de forme proche du cube, de 2 à 15 μm.

TABLEAU IV

| Diagramme de diffraction des rayons X de l'échantillon de phase SAPO-34 brut de synthèse préparé selon l'exemple 10 | |
|---|---|
| d hkl $10^{-10}$m | I/Io |
| 9,25 | 100 |
| 6,91 | 14 |
| 6,29 | 8 |
| 5,55 | 41 |
| 4,96 | 16 |
| 4,297 | 82 |
| 3,992 | 4 |
| 3,863 | 6 |
| 3,551 | 22 |
| 3,443 | 16 |
| 3,229 | 6 |
| 3,162 | 4 |
| 3,025 | 4 |
| 2,928 | 28 |
| 2,878 | 22 |
| 2,769 | 2 |
| 2,661 | 2 |
| 2,605 | 5 |
| 2,482 | 3 |
| 2,324 | 3 |
| 2,268 | 3 |
| 2,088 | 3 |
| 2,025 | 8 |
| 1,912 | 3 |
| 1,861 | 5 |

L'analyse par diffraction des rayons X du produit brut montre qu'il s'agit de la phase SAPO-34 caractérisée par le diagramme de diffraction du tableau IV.

L'analyse de Si, Al, P et K dans les cristaux donne la composition suivante :

$K_{0,01}$ $(Si_{0,13}$ $Al_{0,49}$ $P_{0,38})O_2$

(Le potassium provenant de la solution aqueuse de structurant organique).

La présence de fluor n'est pas détectée par RMN de $^{19}F$.

La perte de masse de structurant, mesurée par TG est de 15,8 %.

Après calcination à 550° C et réhydratation le solide reprend 34 % d'eau en masse, et le spectre de diffraction des rayons X est semblable à celui du tableau IV.

Les capacités d'adsorption de n-hexane et de benzène sont les suivantes :

| | diamètre cinétique $10^{-10}$m | T(°C) | P/Po | quantité adsorbée % en masse |
|---|---|---|---|---|
| n-hexane | 4,3 | 20 | 0,9 | 9,2 |
| benzène | 5,85 | 20 | 0,9 | 9,7 |

Après calcination à 900°C le spectre de diffraction reste identique à celui obtenu après calcination à 550°C.

Après traitement à la vapeur d'eau pure à 750°C pendant 17 heures, la cristallinité est de 100 % par rapport à celle du produit calciné hydraté.

EXEMPLE 11 : Préparation de SAPO-34

On prépare un mélange réactionnel de manière semblable à celui de l'exemple 10, mais en variant les proportions Si/ Al/ P. La composition molaire du mélange final est la suivante :

1 TEA OH: 1 $SiO_2$ : 1,75 $Al_2O_3$ : 0,75 $P_2O_5$ :100 $H_2O$:1 HF

(La fraction engagée correspond à 1/40 mole de $Al_2O_3$).

Le mélange (pH = 8 - 8,5) est chauffé pendant 161 heures à 200°C.

L'analyse par diffraction des rayons X du solide obtenu donne un diagramme de diffraction similaire à celui du tableau IV.

L'analyse de Si, Al, P et K dans les cristaux donne la composition chimique suivante :

$K_{0,008}$ $(Si_{0,12}\ Al_{0,50}\ P_{0,38})O_2$

Les pertes de masse mesurées par TG sont les suivantes :

| $H_2O$ | R |
|---|---|
| 4,3 % | 14,4 % |

Après calcination à 550°C et réhydratation le solide reprend 35 % en masse d'eau.

Après calcination à 900°C, le spectre de diffraction des rayons X est semblable à celui du tableau IV.

EXEMPLE 12 : Préparation de SAPO-34

On prépare un mélange réactionnel identique à celui de l'exemple 11 mis à part la quantité d'eau qui est divisée par deux.

Le mélange (pH = 8 - 8,5) est chauffé pendant 303 heures à 170°C.

L'analyse par diffraction des rayons X du solide obtenu donne un diagramme de diffraction semblable à celui du tableau IV.

L'analyse de Si,Al et P dans les cristaux donne la composition suivante :

$(Si_{0,10}\ Al_{0,46}\ P_{0,44})O_2$

La teneur en fluor mesurée par électrode sélective est de 0,3 en masse.

Les pertes de masse mesurées par T.G. sont les suivantes :

| $H_2O$ | $TEA^+$ + F |
|---|---|
| 5,9 % | 14, 6 % |

Après calcination à 550°C et réhydratation le solide reprend 33 % en masse d'eau.

Le spectre de diffraction des rayons X du produit calciné est semblable à celui du produit brut.

EXEMPLE 13 : Préparation de SAPO-34 .

Dans cette préparation on utilise comme structurant la morpholine (Fluka) au lieu de l'hydroxyde de tétraéthylammonium. La composition molaire du mélange réactionnel final, préparé de manière semblable 4 l'exemple 10, est la suivante :
1,5 Mor * : 0,8 $SiO_2$ :1 $Al_2O_3$ : 0,75 $P_2O_5$ :100 $H_2O$ :1 HF
La fraction engagée correspond à 1/40 mole de $Al_2O_3$.
Le mélange (pH = 8) est chauffé pendant 233 heures à 200° C.
L'observation au microscope optique et au MEB du solide obtenu, montre des cristaux de forme proche du cube de 20 à l00µM.
L'analyse par diffraction des rayons X conduit à un diagramme de diffraction similaire à celui du tableauIV.
L'analyse de Si, Al et P dans les cristaux donne la composition suivante :
$(Si_{0,15}\ Al_{0,49}\ P_{0,36})O_2$
La teneur en fluor mesurée par électrode sélective est de 0,5 % en masse.
Les pertes de masse mesurées par TG sont les suivantes :

| $H_2O$ | Morpholine + F |
|---|---|
| 5 % | 18,3 % |

Après calcination à 550° C le solide adsorbe 36 % d'eau en masse.
Le spectre de diffraction des rayons X du solide calciné est semblable à celui du produit brut.

EXEMPLE 14 : Préparation de SAPO-37

On prépare un premier mélange réactionnel formé par 5,1g d'eau et 4,2g de $H_3PO_4$ à 85 % (Prolabo) auxquels on ajoute 2,8g de pseudo-boehmite (Catapal B de Vista Chemical Company; 76,8 % $Al_2O_3$, 23,2 % $H_2O$).
Le mélange très épais est agité pendant 24 heures.
On prépare un deuxième mélange réactionnel, formé par 18,5g d'hydroxyde de tétrapropylammonium à 40 % (Alfa), 0,19g d'hydroxyde de tétraméthylammonium pentahydrate (Aldrich-Chimie) et 0,54g de silice de combustion (Cab-O-SiL, Cabot-Corporation) qui est agité jusqu'à homogénéisation.
Le mélange final, résultant de l'addition des deux précédents, est agité pendant plusieurs jours, puis l'adjonction de 0,23g de HF à 40 % (Prolabo) est réalisée.
La composition molaire est la suivante :
2TPAOH:0,055 TMAOH:1 $Al_2O_3$ :1$P_2O_5$:0,5 $SiO_2$:60$H_2O$:0,25HF
(La fraction engagée correspond à 1/55 mole de $Al_2O_3$).
Le mélange (pH = 8) est chauffé pendant 24 heures à 200° C dans un autoclave agité chemisé de polytétrafluroéthylène de volume 65 $cm^3$.
L'observation au microscope optique et au MEB du solide obtenu, montre des cristaux sous forme de cuboctaèdres de 2 à 18 µm.
L'analyse par diffraction des rayons X du produit brut montre qu'il s'agit d'une phase SAPO-37 pure. Le diagramme de diffraction obtenu est présenté dans le tableau V.
L'analyse de Si,Al et P dans les cristaux de la phase SAPO-37 donne la composition suivante :
$(Si_{0,137}\ Al_{0,501}\ P_{0,362})O_2$
Les pertes de masse mesurées par T.G. sont les suivantes :

| $H_2O$ | $TPA^+ + TMA^+ + F^-$ |
|---|---|
| 8,5 % | 19,9 % |

* Mor = Morpholine

La teneur en fluor estimée d'après RMN de $^{19}F$ sur solide est de 0,2 à 0,4 % en masse.

Après calcination à 550 °C, le diagramme de diffraction des rayons X du solide maintenu déshydraté est identique à celui du tableau V. L'hydratation à température ambiante du produit calciné provoque une importante baisse de cristallinité.

TABLEAU V

| Diagramme de diffraction des rayons X de l'échantillon de phase SAPO-37 brut de synthèse préparé selon l'exemple 14 | |
|---|---|
| d hkl $10^{-10}$m | I/Io |
| 14,13 | 100 |
| 8,68 | 18 |
| 7,43 | 6 |
| 5,656 | 40 |
| 4,746 | 29 |
| 4,364 | 16 |
| 3,899 | 10 |
| 3,763 | 34 |
| 3,560 | 2 |
| 3,456 | 4 |
| 3,303 | 20 |
| 3,214 | 22 |
| 3,017 | 7 |
| 2,913 | 7 |
| 2,852 | 14 |
| 2,760 | 5 |
| 2,712 | 3 |
| 2,634 | 8 |
| 2,592 | 5 |

**Revendications**

1 - Procédé de synthèse de précurseurs de tamis moléculaires du type silicoaluminophosphate, consistant à réaliser un mélange réactionnel renfermant de l'eau, une source d'aluminium, une source de silicium, une source de phosphore, un agent structurant organique, chauffer ce mélange à une température ≧ 100 °C sous pression autogène pendant une durée suffisante pour effectuer la cristallisation, puis séparer le solide cristallisé se caractérisant en ce que le mélange réactionnel renferme l'acide fluorhydrique comme source d'anions fluorure.

2 - Procédé selon la revendication 1 caractérisé en ce que la composition molaire du mélange réactionnel correspond à :

$r R : s SiO_2 : Al_2O_3 : p P_2O_5 : f F : h H_2O$ où R représente l'agent structurant, et r varie entre 0,01 et 3, de préférence entre 1 et 2, s varie entre 0,01 et 3, de préférence entre 0,5 et 1, p varie entre 0,01 et 1, de préférence entre 0,5 et 1, f varie entre 0,01 et 2, de préférence entre 0,5 et 1 et h varie entre 0 et 500, de préférence 50 et 100.

3 - Procédé selon la revendication 1 ou 2 caractérisé en ce que la source d'aluminium est un oxyde ou

hydroxyde d'aluminium, comme l'hydroxyde d'aluminium $Al(OH)_3$, la boehmite $AlO(OH)$ ou la pseudoboehmite, une alumine, comme l'alumine gamma, un sel d'aluminium, comme le fluorure d'aluminium, le sulfate d'aluminium, le phosphate d'aluminium ou l'aluminate de sodium ou un alkoxyde d'aluminium $Al(OR_1)_3$ où $R_1$ est un radical alcoyle en $C_1$ à $C_4$ et de préférence la pseudoboehmite ou l'isopropoxyde d'aluminium.

4 - Procédé selon l'une des revendications 1 à 3 caractérisé en ce que la source de silicium est la silice sous forme d'hydrogel, d'aérogel ou de suspension colloïdale, les silices provenant de la précipitation de silicates soluble ou de l'hydrolyse d'esters siliciques, comme l'ester tétraéthylique de l'acide monoorthosilicique, $Si(OEt)_4$ ou de l'hydrolyse de complexes comme le fluorosilicate de sodium $Na_2SiF_6$ ou d'ammonium $(NH_4)_2SiF_6$, de préférence la silice sous forme de suspension colloïdale ou d'aérogel.

5 - Procédé selon la revendication 1 ou 2 caractérisé en ce que l'on utilise une source unique pour l'aluminium et le silicium, comme les gels de silice-alumine amorphes ou les aluminosilicates cristallins, de préférence les gels de silice-alumine amorphes.

6 - Procédé selon l'une des revendications 1 à 5 caractérisé en ce que la source de phosphore est l'acide phosphorique ou ses sels et esters comme les phosphates d'alcalin, les phosphates d'aluminium réactifs ou les phosphates d'alkyle, de préférence l'acide phosphorique.

7 - Procédé selon l'une des revendications 1 à 6 caractérisé en ce que le structurant organique est un dérivé d'un élément du groupe 5a du tableau périodique, comme l'azote ou le phosphore, de préférence l'azote.

8 - Procédé selon la revendication 7 caractérisé en ce que le dérivé de l'azote est une amine ou un sel d'ammonium quaternaire comme la diéthylamine, la triéthylamine, la dipropylamine, la tripropylamine, la dibutylamine, la tributylamine, l'hydroxyde de tétraéthylammonium, l'hydroxyde de tétrapropylammonium, l'hydroxyde de tétrabutylammonium ou bien un aminoalcool ou aminoéther comme le diéthylaminoéthanol ou la morpholine.

9 - Procédé selon l'une des revendications 1 à 8 caractérisé en ce que le pH du mélange réactionnel est compris entre 5 et 9.

10 - Procédé selon la revendication 9 caractérisé en ce que le pH est ajusté par addition d'acides, de bases, de sels neutres, acides ou basiques ou de mélanges tampon.

11 - Procédé selon l'une des revendications 1 à 10 caractérisé en ce qu'on ajoute au mélange réactionnel une source de cations de compensation, comme les chlorures, sulfates, acétates ou carbonates alcalins ou alcalino-terreux, de préférence alcalins.

12 - Procédé selon l'une des revendications 1 à 11 caractérisé en ce qu'on chauffe le mélange réactionnel à une température comprise entre 100 et 200° C.

13 - Procédé selon l'une des revendications 1 à 12 caractérisé en ce que la durée de la cristallisation se situe entre 5 heures et 15 jours.

14 - Procédé selon l'une des revendications 1 à 13 caractérisé en ce qu'on introduit dans le mélange réactionnel des germes constitués par des cristaux du tamis moléculaire recherché.

15 - Procédé selon l'une des revendications 1 à 14 caractérisé en ce que le solide cristallisé est séché à l'air entre 60° C et 100° C.

16 - Précurseur de tamis moléculaire préparé par le procédé selon les revendications 1 à 15 caractérisé en ce que dans sa forme anhydre il correspond à la formule générale :

$R_{r'}\ Si_x\ Al_y\ P_z\ O_2\ F_{f'}$

où - la somme de x, y et z est égale à 1 et la valeur x se situe entre 0,01 et 0,3, y entre 0,35 et 0,50, z entre 0,2 et 0,49

- r' est compris entre 0,01 et 0,2

- f' est compris entre 0,01 et 0,2 ce qui correspond à une teneur pondérale en fluor de 0,3 à 8 %.

17 - Application du précurseur selon la revendication 16 à la production par calcination de tamis moléculaires du type silicoaluminophosphate caractérisé en ce que la température de la calcination se situe au-dessus de 200° C et de préférence entre 400 et 700° C.